# EUROPEAN PATENT APPLICATION

(11) **EP 1 001 195 A1**
(43) Date of publication of application: **17.05.2000**
(21) Application number: 98121290.5
(22) Date of filing: 09.11.1998
(51) Int. Cl.: F16J 15/44

(54) **Seal assembly in particular for a turbo generator**

(71) Applicant: SIEMENS AKTIENGESELLSCHAFT, 80333 München (DE)
(72) Inventor: Goodfellow, Richard, Blyth NE 24 35 P (GB); Petty, David Joseph, Hexham NE 46 3 AD (GB); Becker, Ralf, 45133 Essen (DE); Lehmann, Christoph, 47506 Neukirchen-Vluyn (DE)

(57) **Abstract**

The invention relates to a seal assembly, in particular for an electrical machine (11), comprising a first sealing member (2) and a second sealing member (3) for sealing a rotatable shaft (12). The sealing members (2, 3) being axial spaced apart and axial movable, so that they form an axial gap (5) in between. In such a gap (5) a supply (4) for feeding sealing fluid (14) opens. The invention further relates to a machine (11) , in particular a turbogenerator, comprising a seal assembly (1).

## Description

The invention relates to a seal assembly comprising a first sealing member and a second sealing member for sealing a rotatable shaft, in particular for a turbo generator, in which said sealing members being axial spaced apart and axial movable. The seal assembly further comprises supply for feeding the sealing fluid.

Such a sealing assembly is used, for example, on an electrical machine filled with hydrogen, in which the hydrogen is used for cooling purposes. In that case the sealing assembly is used in order to seal a leakage path between a rotatable shaft and a stationary casing of a machine and to prevent an escape of hydrogen into the surroundings of the machine. The use of the sealing assembly on a large turbo generator which is cooled solely with hydrogen, or with hydrogen and water is of particular importance. Such a turbo generator normally has a power output of 200 MVA to 2000 MVA, especially 500 MVA and it has a sealed casing in which hydrogen is under an absolute pressure of 10⁵ Pa to 10⁶ Pa.

A shaft seal for hydrogen-cooled turbo generators is described in German published, non-prosecuted patent application DE 37 12 943 A1, corresponding to U.S. patent No. 4,815,748. That shaft seal has a sealing configuration which is radially movable in a chamber and has two sealing rings enclosing the shaft, with at least one of the sealing rings being axially movable. Sealing oil is directed from the chamber to the shaft to be sealed through the use of radial channels which run either through one sealing ring or between the two sealing rings. The second sealing ring has radial channels which connect the interface between the shaft and the sealing ring to a fluid collecting space. In that way, some of the sealing oil flow is diverted and fed back into the seal assembly thus reducing the quantity of sealing fluid entering the generator.

WO 97/21948 A1 discloses a sealing system for a turbo generator having a single circuit for a sealing oil. A configuration for sealing a lead-through gap (leakage path) between a wall and a rotating shaft passing through the wall, comprises a sealing ring around the shaft with a sealing surface adjacent the shaft. The is located in a holder which is firmly connected to the wall and has a cylindrical recess. A groove opens into the cylindrical recess and defining a first groove surface or flank for holding the sealing ring between the surfaces. The first groove surface has an annular groove. The configuration further comprises a chamber surrounding the sealing ring which is filled with oil remaining in the groove and directed out of the chamber through the at least one line of the sealing surface. An annular seal is held in the annular groove and a branch line communicates between the annular groove and the chamber. The chamber is filled with the oil used for sealing which penetrates into the existing radial gaps between the holder and the sealing ring. Due to the fact that the radial gap is blocked by the annular seal at the first groove surface to prevent a through flow of the oil, oil from a radial gap can no longer reach the interior of the casing thereby become saturated with hydrogen. The annular seal is pressed onto the sealing ring by oil which acts on the annular seal from the chamber through the branch line and the annular groove. In this way the quantity of oil flowing into the generator is reduced.

GB 2 133 482 B discloses an annular seal assembly for use with rotary members, particularly an assembly for minimizing hydrogen leakage past the rotor shaft of the turbine generator set. The seal assembly comprises a rotatable shaft having a journal, a non-rotary annular seal member, which fits around the journal, having on opposite sides radially-extending plain annular faces. The annular sealing member is located in an annular chamber in a housing which is arranged about the journal and which is in two relatively axially slidable parts. These slidable parts have radially-extending plain annular surfaces in sliding engagement with respective annular faces of the seal member. Said parts are also in relatively sealed relationships so as to close the annular chamber and being forced towards one another by biasing means to force the annular surface of the parts against respective annular faces of the seal member. The seal member having a cylindrical inner seal surface interrupted by a circumferential groove and having channels interconnecting the chamber and the groove. The assembly also comprises means to admit lubricant to the chamber at a pressure greater than the pressure externaly to the assembly to cause lubricant to flow through said channels into the groove and between the seal member and the journal. The lubricant is also lubricating the faces of the seal member and the surfaces of the housing parts. The housing consists of three annular parts of steel or other suitable metal, e.g. cast iron or brass.

U.S. patent 3,999,766 discloses a gas cooled dynamoelectric machine comprising sealing means at each end of the machine to prevent the axial leakage of gas coolant out of the machine along the rotor surface. The sealing means comprise an annular holder at each end of the machine, each holder having resiliently mounted therein a pair of sealing rings spaced apart in the axial direction to define an oil feed annulus there between. Seal oil is supplied to the oil feed annulus at a higher pressure than the gas cooled pressure thereby sealing the gas coolant into the machine. There is also provided at least one spring to radially and axially position the sealing rings. A hydraulic fluid, usually oil, is supplied to the oil feed annulus through an oil inlet conduit in the annular holder. The oil feed annulus is in fluid communication with the rotor surface whereby the annular clearance between the sealing means and the rotor surface are supplied with hydraulic fluid to form a fluid seal. A similar sealing assembly is disclosed in DE 31 18 469.Said sealing assembly comprises two sealing rings enclosing a rotor shaft and being mounted in a holder. The sealing rings are spaced apart in the axial direction by a spring to define an oil feed annulus therebetween. Through the spring a radial inwardly directed force as well as an axial directed force is applied on the two sealing rings, so that they are pressed against the inner surface of the holder. On said inner surfaces of said holder an annular seal is provided, in particular an annular lip seal or a rubber seal ring to reduce oil flow through a remaining clearance between the inner surface of the holder and the surface of the adjacent sealing ring.

It is an object of the invention to provide an improved seal assembly, particularly, so not exclusively for application in turbine generator sets.

A seal assembly according to the invention comprises a first sealing member and a second sealing member for sealing a rotatable shaft, said sealing members being axial spaced apart and axially movable, further comprising a supply for feeding (discharging) a sealing fluid between said sealing members, said supply opening in an axial gap between said sealing members.

The seal assembly is in particular useful for a gas seal for rotating shaft by minimizing consumption of the sealing fluid, e.g. a hydraulic fluid like oil, without the use of sliding non-metalic seals or springs. It could be preferably used as double ring hydrogen seal in a hydrogen cooled turbogenerator. By having the two sealing members, one on the gas side of the turbogenerator (hydrogen side) and one on the air side which are axial movable, a gap (e.g. a conduit) between these two sealing members is established. Sealing fluid is fed directly into this gap by the sealing fluid supply opening directly in said gap. The sealing fluid which is directly fed into the gap causes a hydraulic force in the axial direction on the surface of the sealing members by which the sealing rings are spaced apart to form said gap.

In accordance with another feature of the invention said supply for feeding a sealing fluid is formed as a separate ring (oil feedring) through which sealing fluid (oil) is discharged into said gap. The supply allows an injection of sealing fluid to a position near the shaft surface, so that the resulting hydraulic force separates the seal rings in axial direction under all operating conditions.

In accordance with an added feature of the invention, the seal assembly comprises a sealing chamber in which said sealing members, in particular sealing rings, are located. This sealing chamber could be formed by two housing parts which are joined in the axial direction. The two housing parts may be joined so that they are still separable. These two housing parts form a holder for the sealing members. Said sealing chamber has a chamber wall adjacent to one of said sealing members. Due to the hydraulic force caused by the sealing fluid directly fed into the gap between the sealing members, the sealing members are pressed against the wall of the chamber. The geometry of the sealing members (sealing rings) is preferably arranged in a way that the sealing rings are pressed against the walls of the chamber with such a pressure that a minimum leakage of sealing fluid between the walls and the sealing members occurs whilst allowing the rings to follow the lateral movement of the shaft. For further reducing the leakage between chamber wall and sealing members, there are provided grooves in the chamber wall and/or in the surface of the sealing member adjacent to the chamber wall. These grooves may be directed in circumferential and/or radial direction. The grooves are filled with sealing fluid which is fed from the gap through the chamber to the grooves. It is also possible to provide a second supply for sealing fluid which directly feds sealing fluid into said grooves.

In accordance with an additional feature of the invention, said sealing member has an inner radius enclosing said shaft and said supply opens on a supply radius which is greater than said inner radius, for example more than 1.0 mm. In this case the clearance between the rotatable shaft and the supply is greater than the clearance between the sealing member and the rotatable shaft.

In accordance with yet an added feature of the invention, said first and/or second sealing member comprises at least two part-circular parts secured together in such a way that they are still separable. It is also possible that the holder, in particular said two housing parts forming the sealing chamber, comprises also at least two part-circular parts secured together. In this case, the parts of the seal assembly are very easily joint together which is advantageous maintenance.

In accordance with another additional feature of the invention, the seal assembly is part of a rotating machine, in particular a dynamoelectric machine. Said rotational machine is preferably a gas cooled turbogenerator. Such a turbogenerator may have an electrical output from 200 MVA to about 2000 MVA electric. Typical shaft speeds are between 1500 and 3600 revolutions per minute (rpm).

The sealing member and/or the housing parts forming the sealing chamber are preferably made of steel, brass, aluminium alloy, bronze, copper alloy or plastic. Preferably, this material can have a low coefficient of friction, like polytetrafluorethylen, such as TEFLON, which is a trade mark of Dupont. In an inner radius the sealing member can be faced with a soft material, for example white metal.

According to the invention, also a machine comprising a casing, a shaft mounted at least partly within the casing for rotation relatively thereto and a seal assembly as described in the preceeding paragraphs is provided for sealing the shaft relative to the casing is provided.

Other features which are considered as characteristic for the invention are set forth in appended claims.

Although the invention is illustrated and described herein as embodied in a seal assembly, it is nevertheless not intended to be limited to the details shown, since various modifications and structural changes may be made therein without departing from the spirit of the invention and within the scope and range of equivalents of the claims.

The construction and method of operating of the invention, however, together with additional objects and advantages thereof will be best understood from the following description of a specific embodiment when read in connection with the accompanying drawings, of which:
- Figure 1: is a central longitudinal section through part of a machine having a rotatable shaft and a seal assembly and
- Figure 2: is a cross section through part of the casing adjacent to a sealing member.

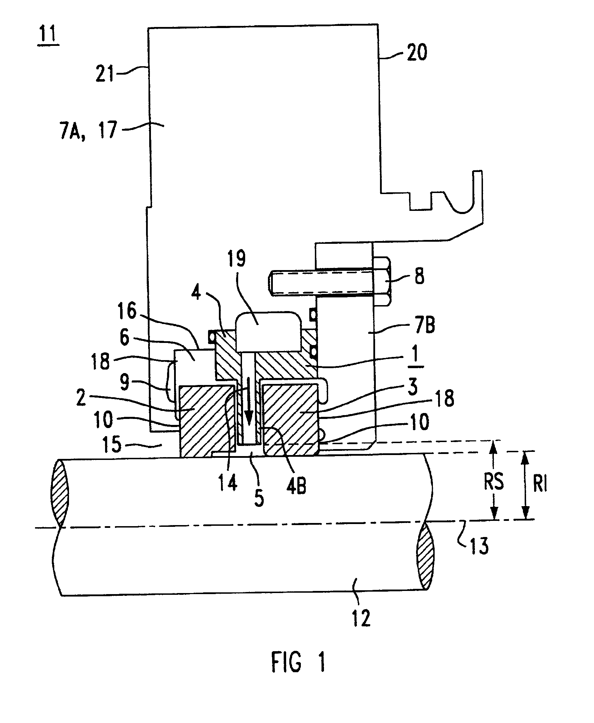

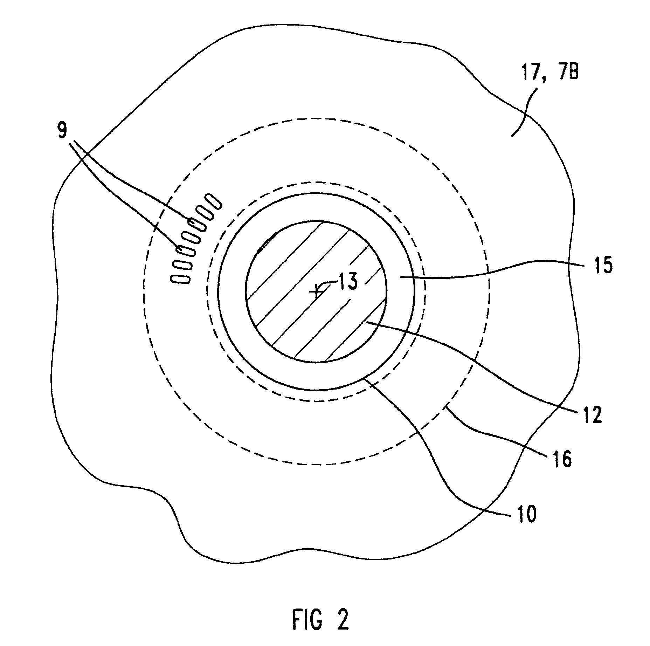

Equal numerals in Figure 1 and Figure 2 have the same meaning.

In figure 1 a central longitudinal section of a machine, in particular a turbo-generator 11, is shown. Said machine 11 comprises a partly shown casing 17 and a shaft 12 which extends out of said machine casing 17, in which hydrogen circulates. Between said casing 17 and the shaft 12, a longitudinal extending gap 15 (radial gap) remains. For sealing this radial gap 15 a seal assembly 1 is provided so that no hydrogen is discharged through the radial gap 15 into the atmosphere that surrounds the machine 11 (air side 20). Said seal assembly 1 comprises a first sealing member 2 adjacent to the hydrogen side 21 (gas side sealing ring 2) and a second sealing member 3 adjacent to the air side 20 (air side sealing ring 3). Said sealing members 2, 3 enclose the shaft 12. The sealing members 2, 3 have an inner radius RI, being of the order of 0.05 mm to 0.8 mm greater than the radius of the shaft 12. The radius of the shaft for a large turbogenerator is about 150 mm to 400 mm. The two sealing members 2 and 3 are situated in a sealing chamber 6 which is formed by a first housing part 7A which is part of the machine casing 17 and a second housing part 7B. The second housing part 7B is ringlike and separable from the casing 17. It is secured to the first housing part 7A by a number of bolts (only one of the bolts 8 is shown in figure 1).

Sealing members 2 and 3 are axial movable and axial spaced apart, forming an axial gap 5 between them. In this gap 5, a ringlike supply 4 for feeding sealing fluid 14 extends in radial direction inwardly. The fluid 14 is supplied via radial channels in said supply ring 4 with supply outlets 4B in the gap 5. The supply outlets 4B open in the gap 5 at a radius RS which is near to the shaft 12 but greater than the inner radius RI of sealing member 2 or 3. The supply ring 4 is separably mounted between the housing parts 7A, 7B forming the seal chamber 6. Said supply outlet 4B is connected with the supply chamber 19 formed between said supply ring 4 and the first housing part 7A for discharging the sealing fluid 14, for example oil or any other adequate lubricant, to the gap 5.

Said seal chamber 6 has two chamber walls 18, formed by the first housing part 7A and the second housing part 7B as well as a chamber ceiling 16 formed by the first housing part 7A.

Chamber walls 18 have recesses so that sealing surfaces 10 are formed which are in close contact with the sealing members 2 and 3, respectively. In the recesses of at least one of the chamber walls 18 radial directed grooves are provided. Due to these grooves and the geometry of the sealing members an adequate pressure for minimizing leakage between the chamber walls 18 and the sealing members 2 and 3 respectively is established. It is also possible to lubricate the surfaces of the sealing rings 2 and 3 adjacent to the chamber walls 18 with the grooves which are filled with sealing fluid 14. The grooves 9 may be directed radially or in circumferential direction. The distance between the sealing surfaces 10 of the first housing part 7A and the second housing part 7B is approximately 80 mm and the over-all-width of the first housing part 7A and the second housing part 7B comprising the seal assembly 1 is about 130 mm.

Figure 2 shows a cross sectional view through the housing part 7A between the chamber ceiling 16 and the rotational axis 13 of the shaft 12. For simplicity only some of the grooves 9 are shown, in the radial direction. The grooves 9 extend between the chamber ceiling 16 and the sealing surface 10.

During operation of the seal assembly 1, either with the shaft 12 at standstill or rotating, sealing fluid 14 is discharged through the supply outlet 4B in the axial gap 5. The sealing fluid 14 is supplied at a pressure which is sufficiently higher than the gas pressure of the hydrogen inside the machine 11, to prevent gas leakage between the sealing chamber 2, the housing wall 18 and the shaft 12. The fluid supply to chamber 19 is from an auxiliary system of pumps, coolers and control valves which is not shown. Typically, the pressure of the hydrogen gas is about 500 kPa (absolute) and the pressure of sealing fluid, in particular oil, is about 0.5 x 10⁵ Pa to 1.5 x 10⁵ Pa above that pressure, the difference being controlled by a differential-pressure control valve located in an oil supply pipe (not shown). The sealing fluid 14, in particular oil, flowing from the seal assembly 1 along the shaft 12 in the direction of the air side or the gas side is collected by special collecting means like rings and labyrinth seals and returned to a seal fluid reservoir (oil sump) not shown. Those details relating to the construction of a turbogenerator including a closed circuit of sealing fluid are not shown as they are general knowledge to those skilled in the art, as described in GB 2 133 482 B and other prior art documents as mentioned above.

Due to the high pressure of the sealing fluid 14, a hydraulic force acts against the two sealing members 2 and 3 in axial direction. The first sealing member 2 is pressed to the gas side and the second sealing member 3 is pressed to the air side. This guarantees on the one hand that the gap 5 is maintained at a fixed axial width, so that the sealing members are spaced apart from the supply outlet 4B. On the other hand, the hydraulic force presses the sealing members 2 and 3 at the sealing surfaces 10 of the chamber walls 18 of the first housing parts 7A and the second housing part 7B, respectively. Due to the geometry of the sealing members 2 and 3 the leakage of sealing fluid 14 between chamber walls 18 and sealing members 2 and 3 is significantly reduced without using annular rubber seals, lip seals or the like. Due to this fact, the volume of the fluid reservoir (not shown) as well as the pump rating for pumping the sealing fluid 14 into the seal assembly 1 can be significantly reduced.

It is self-evident that the spirit of the invention is not restricted to the example shown. In particular it is possible that the supply 4 for feeding a sealing fluid 14 is integrated either in one of the housing parts 7A, 7B or in one of the sealing members 2 or 3.

## Claims

1. A seal assembly (1) comprising a first sealing member (2) and a second sealing member (3) for sealing a rotatable shaft (12), said sealing members (2, 3) being axial spaced apart and axial movable, further comprising a supply (4) for feeding a sealing fluid (14) between said sealing members (2, 3), said supply (4) opening in a radial gap (15) between said sealing members (2, 3).

2. Seal assembly (1) according to claim 1, in which said first and/or second sealing member (2, 3) are/is made as sealing ring.

3. Seal assembly (1) according to claim 1 or 2, in which said supply (4) is formed as a seperate ring.

4. Seal assembly (1) according to claim 1, 2 or 3, comprising a seal chamber (6), in which said sealing members (2, 3) are located.

5. Seal assembly (1) according to claim 4, in which said seal chamber (6) is formed by two housing parts (7A, 7B), which are in axial direction separable and being detachably connected together.

6. Seal assembly (1) according to claim 4 or 5, in which said seal chamber (6) has a chamber wall (18) adjacent to one of said sealing members (2, 3), said chamber wall (18) having at least one groove (9).

7. Seal assembly (1) according to one of the preceding claims, in which said first and/or second sealing member (2, 3) have/has grooves (9) in a surface opposite to said gap.

8. Seal assembly (1) according to claim 6 or 7, in which said grooves (9) are directed in circumferential and/or radial direction.

9. Seal assembly (1) according to one of the preceding claims, which is part of a rotational machine, especially a dynamoelectric machine.

10. Seal assembly (1) according to claim 9, whereby said rotational machine is a gas cooled turbo-generator.

11. Seal assembly (1) according to one of the preceding claims, in which said sealing member (2, 3) has an inner radius for surrounding said shaft (12), said supply (4) opens on a supply radius,and said supply radius is greater than said inner radius.

12. Seal assembly (1) according to one of the preceding claims, in which said first and/or second sealing member (2, 3) comprises at least two part-circular parts secured separably together.

13. A machine (11) comprising a casing (17), a shaft (12) mounted at least partly within the casing (17) for rotating relative thereto and a seal assembly (1) comprising a first sealing member (2) a second sealing member (3) sealing said rotatable shaft (12) against said casing (17), said sealing members (2, 3) being axial spaced apart and axial movable, further comprising a supply (4) for feeding a sealing fluid (14) between said sealing members (2, 3), said supply (4) opening in a radial gap (15) between said sealing members (2, 3).
